**Europäisches Patentamt**

**European Patent Office**

**Office européen des brevets**

(19)

(11) Veröffentlichungsnummer : **0 426 739 B1**

(12) **EUROPÄISCHE PATENTSCHRIFT**

(45) Veröffentlichungstag der Patentschrift :
28.09.94 Patentblatt 94/39

(51) Int. Cl.⁵ : **H04Q 11/04**

(21) Anmeldenummer : **89908814.0**

(22) Anmeldetag : **26.07.89**

(86) Internationale Anmeldenummer :
**PCT/DE89/00488**

(87) Internationale Veröffentlichungsnummer :
**WO 90/01246 08.02.90 Gazette 90/04**

(54) **VERFAHREN ZUM ERLANGEN VON NETZKENNTNISSEN IN EINEM DIGITALEN ÜBERTRAGUNGSNETZ UND EIN DERARTIGES DIGITALES ÜBERTRAGUNGSNETZ.**

(30) Priorität : **26.07.88 DE 3825265**

(43) Veröffentlichungstag der Anmeldung :
**15.05.91 Patentblatt 91/20**

(45) Bekanntmachung des Hinweises auf die
Patenterteilung :
**28.09.94 Patentblatt 94/39**

(84) Benannte Vertragsstaaten :
**AT BE CH DE FR GB IT LI LU NL SE**

(56) Entgegenhaltungen :
**EP-A- 0 048 853**
**FR-A- 2 242 829**
**ICC-'87, IEEE International Conference on Commu-**
**nications, 7-10 June 1987, Seattle, WA, Proceedings,**
**9 June 1987, vol. 2, IEEE, pages 22.3.1-22.3.8; M. De**
**Prycker et al.: "A switching exchange for an**
**asynchronous time division based network"**
**ICC-'86, IEEE International Conference on Commu-**
**nications, 22-25 June 1986, Toronto, CA, vol. 2, IEEE,**
**pages 34.2.1-34.2.7; D.M. Chitre et al.: "ISDN proto-**
**cols and satellites"**
**TN-Nachrichten, issue 83, 1981, Telefonbau und**
**Normalzeit (Frankfurt am Main, DE), pages 51-56; G.**
**Wenzel: "Der zentrale Zeichenkanal No: 7 nach**
**CCITT im digitalen elektronischen Fernsprech-**
**Vermittlungssystem EWSD"**
**CCITT The International Telegraph and Telephone**
**Consultative Committee, Red Book, VIII. Plenary**
**Assembly, 8-19 October 1984, Malaga-Torremolinos**
**(ES), issue VI, vol. IV.4, "Recommendation 0.22",**
**Geneva, CH, pages 7-24; "Specifications for the**
**CCITT automatic transmission measuring and si-**
**gnalling testing equipment ATME No: 2"**

(73) Patentinhaber : **Philips Patentverwaltung GmbH**
**Wendenstrasse 35c**
**D-20097 Hamburg (DE)**

(84) **DE**
Patentinhaber : **N.V. Philips' Gloeilampenfabrieken**
**Groenewoudseweg 1**
**NL-5621 BA Eindhoven (NL)**

(84) **BE CH FR GB IT LI LU NL SE AT**

Patentinhaber : **SIEMENS AKTIENGESELLSCHAFT**
**Wittelsbacherplatz 2**
**D-80333 München (DE)**

(84) **AT BE CH DE FR GB IT LI LU NL SE**
Patentinhaber : **ANT Nachrichtentechnik GmbH**
**Gerberstrasse 33**
**D-71522 Backnang (DE)**

(84) **AT BE CH DE FR GB IT LI LU NL SE**
Patentinhaber : **Ericsson FUBA Telecom GmbH**
**Am Weinberg 65**
**D-31134 Hildesheim (DE)**

(84) **AT BE CH DE FR GB IT LI LU NL SE**
Patentinhaber : **KRONE Aktiengesellschaft**
**Beeskowdamm 3-11**
**D-14167 Berlin (DE)**

(84) **AT BE CH DE FR GB IT LI LU NL SE**
Patentinhaber : **Quante Aktiengesellschaft**
**Uellendahler Strasse 353**
**D-42109 Wuppertal (DE)**

(84) **AT BE CH DE FR GB IT LI LU NL SE**
Patentinhaber : **Alcatel SEL Aktiengesellschaft**
**Lorenzstrasse 10**
**D-70435 Stuttgart (DE)**

(84) **AT BE CH DE FR GB IT LI LU NL SE**

(72) Erfinder : **DIEKMEIER, Martin**
**Forsthausstrasse 24**
**D-6110 Dieburg (DE)**
Erfinder : **FLOR, Eckhard**
**Zeilharder Strasse 15**
**D-6107 Reinheim (DE)**
Erfinder : **HAHN, Klemens**
**Ulmenweg 6**
**D-6108 Weiterstadt (DE)**
Erfinder : **HIMMEL, Gerhard**
**Frühlingstrasse 15**
**D-6940 Weinheim (DE)**
Erfinder : **WOLF, Helmut**
**Sudetenstrasse 3**
**D-6102 Pfungstadt (DE)**

(74) Vertreter : **Fuchs, Franz-Josef, Dr.-Ing. et al**
**Postfach 22 13 17**
**D-80503 München (DE)**

## Beschreibung

Die Erfindung betrifft ein Verfahren zur Erlangung von Netzkenntnissen in den einzelnen übertragungsspezifischen Betriebsstellen eines digitalen Übertragungsnetzes mit mehreren Netzknoten, bei dem für die Übertragung digitaler Signale in deren Overhead eine Zusatzinformation eingeblendet wird.

In der europäischen Patentanmeldung EP 0 048 853 Al, in der deutschen Offenlegungsschrift DE-A- 24 41 099 und in den Proceedings IEEE, Band 2, 9.6.1987, International Conference on Communications, 7.-10.06.1987, Seattle WA sind jeweils Fernsprechvermittlungsnetze mit Vermittlungsstellen beschrieben, über die Teilnehmer verbunden werden.

Es ist Stand der Technik, daß bei Übertragungssystemen der Digitaltechnik verschiedene Digitalsignalverbindungen DSV in den Netzknoten entweder im Gesamt oder aufgetrennt in einzelne Digitalsignalverbindungen DSV weiter durchgeschaltet werden. Vor und hinter jedem Gerät einer Hierarchiestufe sind Verteiler angeordnet, in denen man diese Digitalsignalverbindungen DSV entsprechend der gewünschten Verbindungsführung den jeweiligen Geräten zuordnet und somit diese Verbindungen durchschaltet.

Stand der Technik ist weiterhin, daß diese Verteiler rechnergesteuert und funktionsmäßig als Koordinatenschalter ausgeführt sind. Im Zuge einer rechnergesteuerten Digitalsignalverbindung DSV ist ebenfalls bekannt, daß die verschiedenen Multiplexer und die zugehörigen Verteiler zu einer Gerätekombination zusammengefaßt sind. Somit können die Verteiler und die entsprechenden Multiplexstufen über einen zentralen Rechner angesteuert und verwaltet werden. Bei im Übertragungssystem auftretenden Fehlern ermöglicht diese zentrale Steuerung eine Ersatzschaltung, wie sie ansonsten mit Betriebskräften vor Ort durchgeführt wurde. Nachteil des Standes der Technik ist, daß bei einem Ausfall des Zentralrechners die ursprüngliche Wegeinformatin eines Digitalsignalbündels nicht mehr innerhalb der Netzknoten rekonstruierbar ist, da sich die gesamte Information über die Leitungsführung im Zentralrechner befindet.

Die in den einzelnen Netzknoten befindlichen externen Bedien- und Anzeigeanordnungen bzw. Teilrechner sind nicht in der Lage, den ursprünglichen oder den momentanen Weg der Verbindung erneut herzustellen.

Aus der europäischen Patentanmeldung EP 0 214 398 Al ist ein Verfahren zur Überwachung und Steuerung des Verkehrs in digitalen Übertragungsnetzen mit Netzknoten über ein Steuernetz bekannt. Hierbei erhält jedes Digitalsignal eine Kennung, die Informationen über die Verkehrsbedingungen der einzelnen Digitalverbindungen umfaßt, wie beispielsweise eine fortlaufende Numerierung aller Quellen mit Richtungsangabe oder auch Angabe eines Ortes oder Bezirks. Die Kennung einer gewünschten Digitalsignal-Verbindung wird über das Steuernetz den betroffenen Netzknoten mitgeteilt, die entsprechend gesteuert werden. Dort wird die Kennung der Digitalsignale auch überwacht. Sie enthält zwar eine Information über die Verbindung, nicht aber über den Weg, so daß bei Ausbleiben von Weginformationen über das Steuernetz eine Verbindung nicht mehr aufgebaut werden kann.

Die Aufgabe der Erfindung ist es, ein Verfahren anzugeben, das jedem Netzknoten NK die Möglichkeit gibt, die momentane Leitungsführung aller durch diesen Netzknoten NK durchgehenden Digitalsignalbündel zu erfassen, sowie die Möglichkeit zu schaffen, auch bei Ausfall des Zentralrechners eine Schaltung der Nutzsignale über die einzelnen NetzKnoten zu ermöglichen.

Diese Aufgabe wird durch die im kennzeichnenden Teil des Hauptanspruchs beschriebene Erfindung gelöst.

Vorteilhafte Ausgestaltungen dieser Erfindung sind in den Unteransprüchen näher gekennzeichnet.

Die Erfindung hat den Vorteil, daß ohne Erhöhung der vorhandenen Übertragungskapazität jedem Netzknoten die vollständige Information über Art und Führung der über ihn geführten Digitalsignalverbindungen ( DSV ) übermittelt wird.

Im folgenden soll die Arbeitsweise des Verfahrens an Hand eines Beispiels erläutert werden.

Ausgangbasis:

1. Betrachtet wird ein Netz, bestehend aus den 6 Netzknoten A,B,C,D,E,F mit elektronischen Verteilern (Bild 1).
2. Die elektronischen Verteiler werden durch lokale Rechner kontrolliert, die die Hardwarefunktionen der Netzknoten ausführen und überwachen.
3. Schaltungen in den Verteilern werden durch einen Zentralrechner ausgelöst, der über entsprechende Netzkenntnisse verfügt und an den die lokalen Rechner angeschlossen sind.
4. Die Strecke zwischen 2 Netzknoten wird im folgenden als Digitalsignalabschnitt (DSA) bezeichnet, z.B. Bild 1, A5 - D2.
5. Die gesamte durchgeschaltete Verbindung vom ersten bis zum letzten Netzknoten (Bild 3, X - Y, wobei X und Y entweder Multiplexer oder Quellen/Senken sein können, wird im folgenden als Digitalsignalver-

2

bindung (DSV) bezeichnet.

6. An den Eingängen der elektronischen Verteiler werden die einlaufenden Digitalsignale durch die Standardüberwachungseinheiten (UE 1-8) überwacht auf:

- NDS = Nutzdigitalsignal
- PDS = Prüfdigitalsignal
- EDS = Ersatzdigitalsignal
- AIS = Alarm Indikations Signal
- KDS = Fehlen jeglichen Eingangssignals
- Qualitäts- und Verfügbarkeitsparameter

7. NDS bedeutet, daß sich der DSA im Zuge einer geschalteten DSV befindet, die ein normal strukturiertes Signal führt.

8. EDS bedeutet, daß der DSA selbst nicht gestört ist, sich jedoch im Zuge einer gestörten DSV befindet.

9. PDS bedeutet, daß der DSA frei ist.

10. AIS und KDS zeigen an, daß der DSA selbst unmittelbar gestört ist.

11. AIS ist ein unstruktriertes Signal.

12. NDS, PDS und EDS sind entsprechend dem normalen im Netz üblichen Rahmen strukturiert. Sie führen im Rahmen einen Datenkanal. An Hand der darin geführten Informationen kann unterschieden werden, ob es sich um NDS, PDS oder EDS handelt. Dies erlaubt, alle nicht unmittelbar gestörten DSA mit Hilfe der Standardüberwachungseinheiten (UE) immer auf Qualität und Verfügbarkeit zu überwachen.

13. Sofern die Standardstruktur erkannt wird, wird zusätzlich das Eingehen gültiger/zulässiger Informationen im Datenkanal überwacht.

Arbeitsweise des Verfahrens:

1. Zum Prüfen bei der Einrichtung von DSV und zum Überwachen bestehender DSV werden im Datenkanal nach folgendem Prinzip Daten transportiert:

Die Endknoten einer DSV (Bild 1, A und E) senden ein Telegramm mit Starterdaten in Richtung des gegenüberliegenden Endes. Jeder folgende Knoten in der DSV liest das eingehende Telegramm, überprüft es und hängt weitere eigene Informationen (Durchgangdaten) an, bevor er es weiterreicht.

Die Endknoten müssen ihre Telegramme wiederholend aussenden, wobei die maximale Zeit zwischen 2 Telegrammstarts festgelegt ist.

Die nachfolgenden Netzknoten überwachen das Eintreffen der Telegramme. Werden über einen Zeitraum, der größer als n mal der maximalen Zeit zwischen Telegrammstarts (n z.B. = 3) keine zulässigen Telegramme empfangen, so beginnt der entsprechende Netzknoten selbst als Behelfsstarter ein Telegramm abzusetzen. Damit können alle nachfolgenden Knoten den Störungsort erkennen.

Die Telegramme enthalten folgende Informationen:

- ST (= Startzeichen)
- Starterdaten
- je durchlaufenem Durchgangsknoten dessen Durchgangsdaten
- ET (= Endezeichen)

Zur Sicherung der Telegrammdaten, werden Prüfbits eingefügt und z.B. mit Überabtastung gearbeitet und wichtige Informationsteile mehrfach, auch invertiert übertragen.

Die Starterdaten bestehen aus:

Kennung (Kxyz) als Starter bzw Behelfsstarter mit Signalart und Betriebsweise

Identifikation des Zielknotens

Identifikation des Zielports am Zielknoten

Identifikation des sendenden Knotens

Identifikation ankommenden Ports

Identifikation des abgehenden Ports

Die Durchgangsdaten enthalten:

Kennung (Kxyz) als Durchgangsknoten mit Signalart und Betriebsweise

Identifikation des Durchgangsknotens

Identifikation des Eingangsports

Identifikation des Ausgansports

Die Kennung (Kxyz) ist im dieser Beschreibung mnemonisch dargestellt. Es bedeuten im einzelnen:

```
K       :    Kennung

x=   E:      Ersatzdigitalsignal (EDS)

     P:      Prüfsignal (PDS)

     N:      Nutzdigitalsignal mit Normal-

             struktur (NDS)

     S:      Nutzdigitalsignal mit

             Sonderstruktur (SNDS)

y =  N:      Normalstarter (Endknoten)

     B:      Behelfsstarter

     D:      Durchgangsknoten

z =  U:      Betriebsart Überwachung

     V:      Betriebsart Verbindungsprüfung
```

Sofern der Teil des Signaloverheads, der als Datenkanal für die Telegramme genutzt wird bereits anderweitig mit Informationen belegt ist, so werden diese Informationen zwischen den Netzknoten ebenfalls im Telegramm übertragen.

## 2. Ruhezustand

Auf nicht durchgeschalteten DSA werden folgende Telegramme ausgetauscht (Bsp. Bild 1, zwischen A5 und B2):

```
A5 -> D2       ST, KPNÜ, D0, A0:5, ET
D2 -> A5       ST, KPNÜ, A0, D0:2, ET
```

A0 und D0 sind nicht existente Dummy-Anfangs- bzw Endeports. Sie indizieren, daß im Knoten nicht durchgeschaltet ist.

## 3. Schaltung einer DSV

Der Zentralrechner ermittelt einen Weg und gibt jedem beteiligten Netzknoten einen Schaltbefehl mit folgendem Inhalt:

Schalte Port n auf m ; Endknoten der DSV

Beispiel Bild 2, Schaltung der DSV von X nach Y über AD-C-F-E:

```
Schaltbefehle an     A:     0, 5 ; A0, E0
                     D:     2, 8 ; A0, E0
                     C:     7, 8 ; A0, E0
                     F:     2, 5 ; A0, E0
                     E:     7, 0 ; A0, E0
```

A0 und E0 sind Dummyports. Die Endknoten A und E schalten zunächst nicht durch. Die Durchgangsknoten D, C und F schalten durch.

A und E erkennen aus dem Schaltbefehl, daß die DSV bei ihnen endet und starten die Prüfphase, indem sie Überprüfungstelegramme in Richtung des gegenüberliegenden Endpunktes absetzen.

In der Prüfphase werden folgende Telegramme von A nach E übertragen:

```
A->D:       ST,KPNV,E0,A0:5,ET
D->C:       ST,KPNV,E0,A0: 5,KPDV,D2:8,ET
```

```
C->F:        ST,KPNV,E0,A0:5,KPDV,D2:8,KPDV,C7:8,ET
F->E:        ST,KPNV,E0,A0:5,KPDV,D2:8,KPDV,C7:8,KPDV,F2:5,ET
```

Der Knoten E kann am eingehenden Telegramm erkennen, ob die Schaltung korrekt erfolgt ist. Entsprechendes wird für die Gegenrichtung durchgeführt.

Die Endknoten A und E melden daraufhin die korrekte Durchschaltung an den Zentralrechner, der dann die Durchschaltebefehle an die Endknoten gibt.

```
Schaltbefehle an       A:      3, 5 ; A3, E6
                       E:      7, 6 ; A3, E6
```

Mit vollzogener Durchschaltung (Bild 3) führt die DSV ein Nutzsignal (NDS).

Es wird auf Überwachungsbetrieb umgeschaltet, und entsprechend ändern sich die übertragenen Informationen.

Beispiel Telegramme von A nach E:

```
A->D:        ST,KNNÜ,E6,A3:5,ET
D->C:        ST,KNNÜ,E6,A3:5,KNDÜ,D2:8,ET
C->F:        ST,KNNÜ,E6,A3:5;KNDÜ,D2:8,KNDÜ,C7:8,ET
F->E:        ST,KNNÜ,E6,A3:5,KNDÜ,D2:8,KNDÜ,C7:8,KNDÜ,F2:5,ET
```

Entsprechendes gilt für die Gegenrichtung.

Dadurch erlangen alle Netzknoten, über die eine DSV geschaltet ist, die Information über deren gesamte Führung im Netz. Eventuelle, durch Ersatzschaltungen bedingte Führungsänderungen werden den Knoten automatisch zur Kenntnis gebracht.

4. Fehlererkennung und Behandlung

Für den Fall, daß einer der Durchgangsknoten nicht in der Lage ist, die geforderte Schaltung auszuführen (z.B. aufgrund eines Fehlers im Koppelfeld), so meldet er dies an den Zentralrechner, und sendet auf den betroffenen Ports als Behelfsstarter mit EDS. Der Zentralrechner muß dann die Verbindung auflösen und einen anderen Weg im Netz suchen.

Für den Fall, daß einer der Endknoten nicht durchschalten kann, wird dies dem Zentralrechner mitgeteilt und gleichzeitig ein Telegramm als Behelfsstarter mit EDS zur Gegenstelle.

Beispiel Bild 2, A kann nicht auf Port 3 durchschalten.

E erhält dann das Telegramm
ST,KEBV,E6,A0:5,KEDV,D2:8,KEDV,C7:8,KEDV,F2:5,ET und kann erkennen, daß in A ein Fehler vorliegt und die DSV somit nicht geschaltet ist.

Wurde in einem Knoten fehlerhaft geschaltet (z.B. in Knoten C in Bild 4), so empfängt der Knoten D an Port 8 weiterhin
ST,KPNÜ,D0,C0:7,ET.

Nach einer definierten Wartezeit beginnt D nun selbständig als Behelfsstarter in Richtung A zu arbeiten. A erhält somit das Telegramm:
ST,KEBV,A0,D0:2,ET
und weiß, daß vor Knoten D ein Fehler liegen muß.

Für Knoten F sind zwei Fälle möglich:
- Er empfängt weiterhin an Port 2 das Prüfsignal für unbeschaltete DSA, oder
- er empfängt ein Prüf- oder Nutzsignal, das jedoch nicht die korrekten Anfangs- und Endknoten E und A enthält.

In beiden Fällen beginnt er in Richtung E als Behelfsstarter zu arbeiten, so daß auch der Endknoten E über den Fehlerort informiert ist.

Wird eine bestehende DSV unterbrochen oder gestört, so erhalten die Knoten im Zuge der DSV Informationen über den Ort der Störung (Bild 5). Die Knoten C und D erkennen an ihren Ports 7 bzw 8 entweder KDS oder AIS. Sie setzen daraufhin abgehend (C über Port 8, D über Port 2) jeweils EDS ein.

Die Endknoten erhalten die Information über den Fehler durch die Telegramme an

```
A:      ST,KEBÜ,A3,D0:2,ET
E:      ST,KEBÜ,E6,C0:8,KEDÜ,F2:5,ET.
```

5. Überwachung von Digitalsignalen mit Sonderstrukturen.

Müssen im Netz Digitalsignale geführt werden, die nicht die sonst übliche Struktur besitzen, so ist deren Überwachung mit Hilfe der an jedem Eingang der elektronischen Verteiler vorhandenen Standardüberwachungseinheiten (UE) nicht möglich.

Um insbesondere auch Qualität und Verfügbarkeit kontrollieren zu können, müssen gesonderte Überwachungseinheiten eingesetzt werden.

Es besteht nun die Möglichkeit, die Standardüberwachungseinheiten an den Verteilereingängen durch sondersignalspezifische Einheiten zu ersetzen. Damit werden jedoch hardwaremäßig bestimmte DSA diesen Signalarten fest zugeordnet. Dies wirkt sich nachteilig auf die Flexibilität der DSV-Führungs- und Ersatzschaltemöglichkeit aus.

Um diese Nachteile zu vermeiden, wird hier daher vorgeschlagen, die Standardüberwachungseinheiten an den Eingangsports der Netzknoten zu belassen und die DSV mit Sonderstruktur über an den Verteilern angeordnete Sonderüberachungseinheiten (S-UE 1-4) zu schleifen (Bild 6).

Das Einrichten einer solchen DSV ist bis einschließlich der Prüfphase nahezu identisch mit dem einer normalen DSV.

Es werden zwei zusätzliche Funktionen benötigt:
- Der Schaltbefehl vom Zentralrechner muß eine ergänzende Information enthalten, um welche Art von Sondersignal es sich handelt.
- Die betroffenen Netzknoten schleifen die Verbindung dann über die entsprechende Sonderüberwachungseinheit. Netzknoten, die keine geeignete Überwachungseinheit besitzen, schalten direkt durch.

In der Prüfphase wird die DSV unter Anwendung des PDS, das über die normale Struktur verfügt, mit Hilfe der normalen Überwachungseinheiten kontrolliert.

In den Knoten, wo die DSV über Sonderüberwachungseinheiten geschleift ist, werden diese zwar das Fehlen einer für sie geeigneten Struktur als Fehler anzeigen, da der lokale Steuerrechner jedoch weiß, das es sich noch um die Prüfphase handelt, kann er diese Alarmierungen unterdrücken.

Mit der Durchschaltung in den Endknoten erhält das in der DSV geführte Signal die Sonderstruktur.

Damit werden in allen beteiligten Knoten die Standardüberwachungseinheiten das Fehlen einer geeigneten Struktur als Fehler anzeigen. Da die jeweiligen lokalen Steuerrechner jedoch wissen, daß in der DSV ein Sondersignal geführt wird, unterdrücken sie diese Alarme und geben die Alarmierungen der Sonderüberwachungseinheiten frei, die, sofern keine wirkliche Störung vorliegt, nunmehr keine Fehler mehr anzeigen.

Da die Telegramme mit der Führungsinformation im Rahmen der Digitalsignale geführt sind, müssen diese nunmehr durch die Sonderüberwachungseinheiten gelesen, kontrolliert und ergänzt werden. Somit verschwinden aus den Telegrammen die Führungsinformationen über die Knoten, die nicht über geeignete Sonderüberwachungseinheiten verfügen.

Die genaue Lokalisierung einer eventuellen Störung (Bild 7) ist jedoch auch dann noch möglich. Dazu ist es notwendig, daß die Standardüberwachungseinheiten weiterhin das Signal Überwachen und versuchen, die normale Rahmenstruktur zu finden. Lediglich die Weiterleitung ihrer Alarmierungen muß unterdrückt werden.

Im Falle einer Störung (Bild 7) erkennen die Knoten

D:      KDS oder AIS an Port 8
C:      KDS oder AIS an Port 7

mit ihren Standardüberwachungseinheiten.

Sie setzen daraufhin abgehend (also über C8 bzw D2) EDS ein und arbeiten als Behelfsstarter. Bei allen nachfolgenden Knoten wird die normale Rahmenstruktur (EDS) erkannt und die DSV kippt in den gleichen Zustand, als sei eine DSV mit Standardstruktur unterbrochen. Dadurch kann mit einer minimalen Menge von Sonderüberwachungseinheiten trotzdem an den Endknoten im Fehlerfalle eim Maximum an Information zur Verfügung gestellt werden.

Dieses Verfahren biete folgende Vorteile:
- Sondersignale können auf beliebigen Wegen im Netz geführt werden, d.h. es muß keine feste (hardwaremäßige) Zuordnung von DSA zu bestimmten Signalarten erfolgen. Führungsänderungen wie z.B. Ersatzschalten sind problemlos möglich, das Netz bleibt flexibel.
- Pro DSV mit Sondersignal ist es ausreichend, je Endknoten eine Sonderüberwachungseinheit zu installieren, wodurch sich der Aufwand zur Führung solcher Signale im Netz stark reduziert.

6. Suchen und Schalten einer DSV-Führung ohne Zentralrechner für DSV mit Standardstruktur

Die zu Überwachungszwecken eingeführten Signale und Telegramme können auch dazu genutzt werden, bei Fehlen oder Ausfall des Zentralrechners ausgehend von einem Endknoten einer zu schaltenden DSV einen Verbindungsweg zu finden und diesen durchzuschalten.

Hierzu muß jeder lokale Rechner Listen vorhalten, die angeben, zu welchem Nachbarknoten eine Verbindung durchzuschalten ist, wenn diese an einem bestimmten Zielknoten enden soll.

Für das Beispiel in Bild 8 wären für die Knoten beispielsweise folgende Listen vorzusehen:

| Liste in Knoten | Ziel- knoten | Nachbarknoten 1. | 2. | 3. Versuch |
|---|---|---|---|---|
| A | E | C | D | B |
| B | E | F | D | A |
| C | E | E | F | D |
| D | E | C | F | |
| F | E | E | C | |

Zunächst sind alle DSA unbeschaltet und auf ihnen wird jeweils das Prüfsignal ausgetauscht.

A startet den Aufbau der Verbindung A3 - E6, indem er gemäß seiner Liste nach Knoten C über Port 8 folgendes Telegramm schickt:

ST,KPNV,E6,A3:8,ET

Knoten C schaltet daraufhin gemäß seiner Liste über Port 1 auf Port 6 zu E durch und reicht das ergänzte Telegramm weiter:

ST,KPNV,E6,A3:8,KPDV,C1:6,ET

Knoten E erkennt, daß er der Endknoten ist, und quittiert, sofern er in der Lage ist, auf E6 durchzuschalten, zu A zurück:

E -> C      ST,KPNV,A3,E6:1,ET

Somit erhält A:

ST,KPNV,A3,E6:1,KPDV,C6:1,ET

und weiß, daß die Verbindung bis E steht und dort auch bis zum Ziel geschaltet werden kann.

A schaltet durch und löst auch bei E die Durchschaltung aus, indem er in der Kennung die Betriebsart von Verbindungsprüfung auf Überwachung und von PDS auf NDS umschaltet.

A -> C:      ST,KNNÜ,E6,A3:8,ET
C -> E:      ST,KNNÜ,E6,A3:8,KNDÜ,C1:6,ET

Nach der Durchschaltung bei E ist die DSV geschaltet und es werden in beiden Richtungen die normalen Überwachungstelegramme übertragen.

Kann der Knoten E nicht zum Ziel (Port 6) durchschalten, weil dieses beispielsweise schon anderweitig verbunden ist, so meldet er als Behelfsstarter zurück:

ST,KPBV,A3,E6:1,ET

Da E der Endknoten ist, kann die Verbindung prinzipiell nicht aufgebaut werden. Die Durchgangsknoten wissen aus dem bisherigen Durchschalteverfahren, daß E der Endknoten ist und aus dem rückgesendetem Telegramm, daß E nicht schalten kann. Sie reichen daher das Telegramm bis zum Anfangsknoten A zurück und lösen anschließend ihre Durchschaltungen auf.

Ist bereits ein Durchgangsknoten wie Knoten C nicht in der Lage, die Verbindung weiterzuschalten, so meldet er als Behelfsstarter zurück:

ST,KPBV,A3,C0:1,ET.

Der vorhergehende Knoten, im Beispiel Knoten A, würde dann versuchen, die Verbindung über den nächsten in seiner Tabelle stehenden Knoten weiterzugeben (gemäß Tabelle in A, 2. Versuch nach Knoten D).

Mit diesem Verfahren können auch bei Störungen von DSV entweder von einem der Endknoten oder einem unmittelbar am gestörten DSA liegenden Knoten aus Ersatzschaltungen vorgenommen werden, ohne daß ein Zentralrechner steuernd eingreifen muß.

7

Um eine möglichst optimale DSV-Führung zu erreichen, sind die in den Netzknoten bereitzuhaltenden Listen entprechend zu ermitteln. Dies. könnte z.B. durch einen Zentralrechner mit umfangreichen Netzkenntnissen geschehen, der jedoch nicht mehr unmittelbar schalten muß, sondern zeitunkritisch die Listen aktualisiert. Eine Optimierung könnte beispielsweise auch dadurch erfolgen, indem versucht wird über unterschiedliche Durchgangsknoten das Ziel zu erreichen und letztlich den Weg zu schalten, der über die wenigsten Knoten führt.

7. Suchen und Schalten einer DSV-Führung ohne Zentralrechner für DSV mit Sonderstruktur

Das unter 6 beschriebene Verfahren zum Wegesuchen läßt sich auch für das Schalten von DSV mit Sondersignalen nutzen. Hierzu ist es notwendig, den beteiligten Knoten während des Aufbau- und Prüfvorgangs mitzuteilen, daß die einzurichtende DSV ein Sondersignal führen wird.

Dies kann geschehen, indem in der Kennung Kxyz der Parameter z um einen möglichen Wert erweitert wird (mnemonische Darstellung):

$z = S$:      Betriebsart Verbindungsprüfung für DSV mit Sondersignalstruktur.

Es besteht die Möglichkeit, daß zusätzlich die Art des Signals im Telegramm näher spezifiziert wird, so daß die Knoten sofort entsprechende Sonderüberwachungseinheiten, soweit vorhanden, einschleifen können.

Wird die Signalart nicht näher spezifiziert, so können die einzelnen Knoten nach dem Durchschalten in den Endknoten, also wenn das Sondersignal bereits in der DSV geführt wird, versuchen, selbständig eine geeignete Sonderüberwachungseinheit zu finden, indem sie die Verbindung nacheinander über die jeweils in ihnen vorhandenen Sonderüberwachungseinheiten schleifen, bis eine gültige Struktur erkannt wird.

Bei Nichterkennung wird das Signal direkt durchgeschaltet. Hier ist jedoch zu beachten, daß durch das Suchen die DSV u.U. nach dem Durchschalten noch einige Zeit gestört werden kann.

Ein andere Variante stellt die grundsätzliche Beschränkung des Schleifens über Sonderüberwachungseinheiten an den Endknoten dar. Der die Schaltung startende Knoten weiß in jedem Falle, um welche Art von Sondersignal es sich handelt. Damit muß nur noch der Endknoten die passende Sonderüberwachungseinheit suchen und die DSV darüber schleifen.

Wie bei unter Punkt 6 erläutert löst der Startknoten A die Durchschaltung in E aus, indem er selbst durchschaltet, und in der Kennung die Betriebsart auf Überwachung ändert.

Im Endknoten E meldet damit die Standardüberwachungseinheit das Fehlen der normalen Struktur. Der Knoten E weiß aus der Prüfphase, daß ein Sondersignal zu führen ist, und beginnt nun, nach der geeigneten Sonderüberwachungseinheit zu suchen. Während des Suchens sendet er weiterhin PDS an A zurück.

Hat er die geeignete Einheit gefunden, schleift E das Signal über diese Sonderüberwachungseinheit und schaltet durch. Somit wird auch in Rückrichtung das Sondersignal übertragen, in dem nunmehr die normalen Überwachungstelegramme geführt werden.

Findet E keine geeignete Sonderüberwachungseinheit, so sendet er PDS mit der Information "Behelfsstarter" zu A.

A erkennt daran, daß die Verbindung nicht hergestellt werden kann, da der gegenüberliegende Endknoten nicht ausreichend hardwaremäßig ausgerüstet ist.

Das Auflösen der Verbindung erfolgt dann wie unter 6 beschrieben.

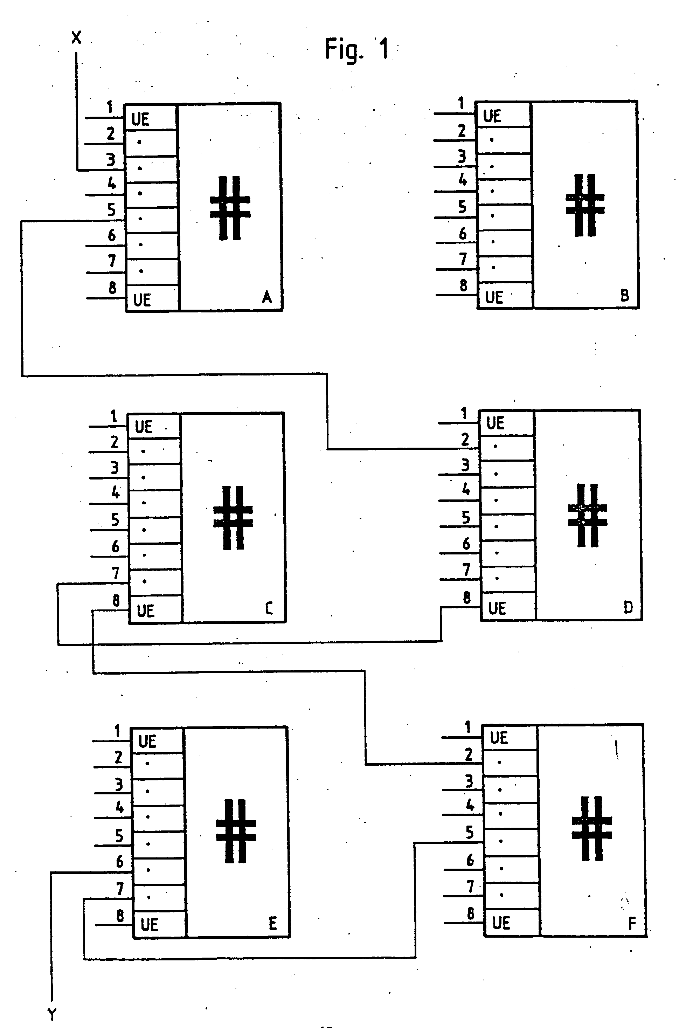

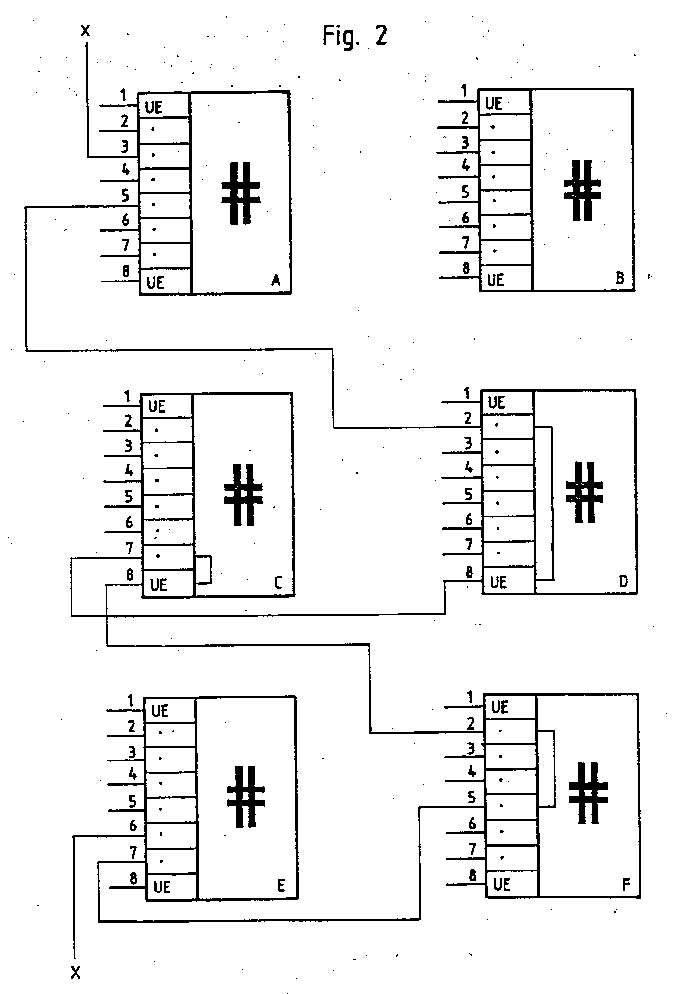

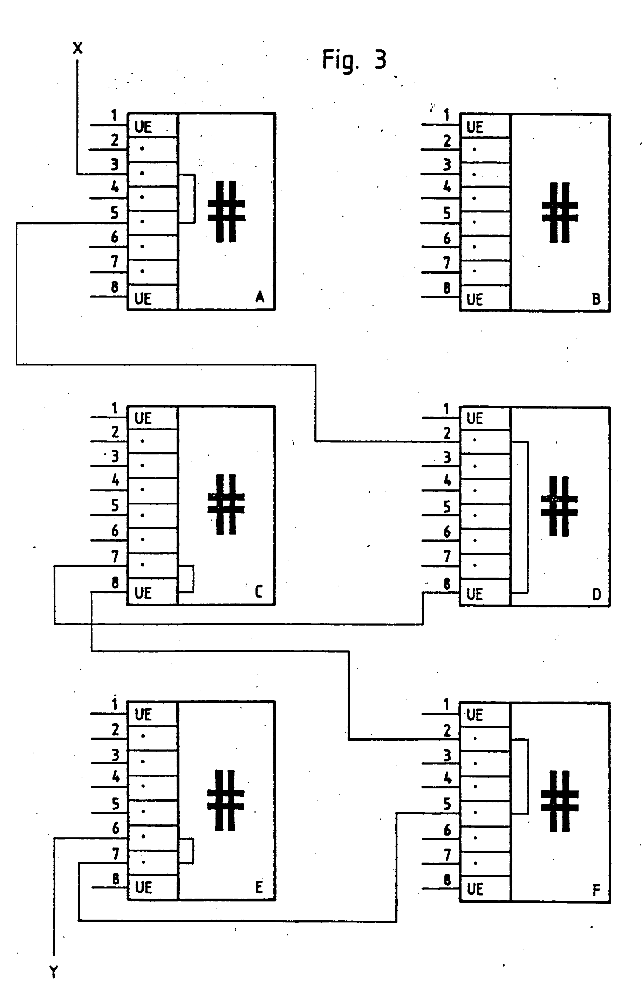

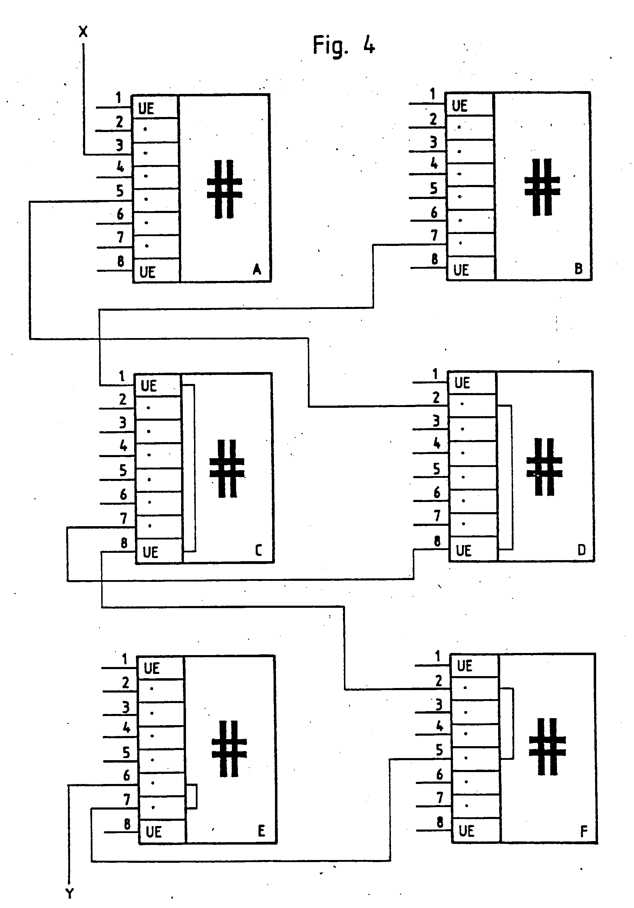

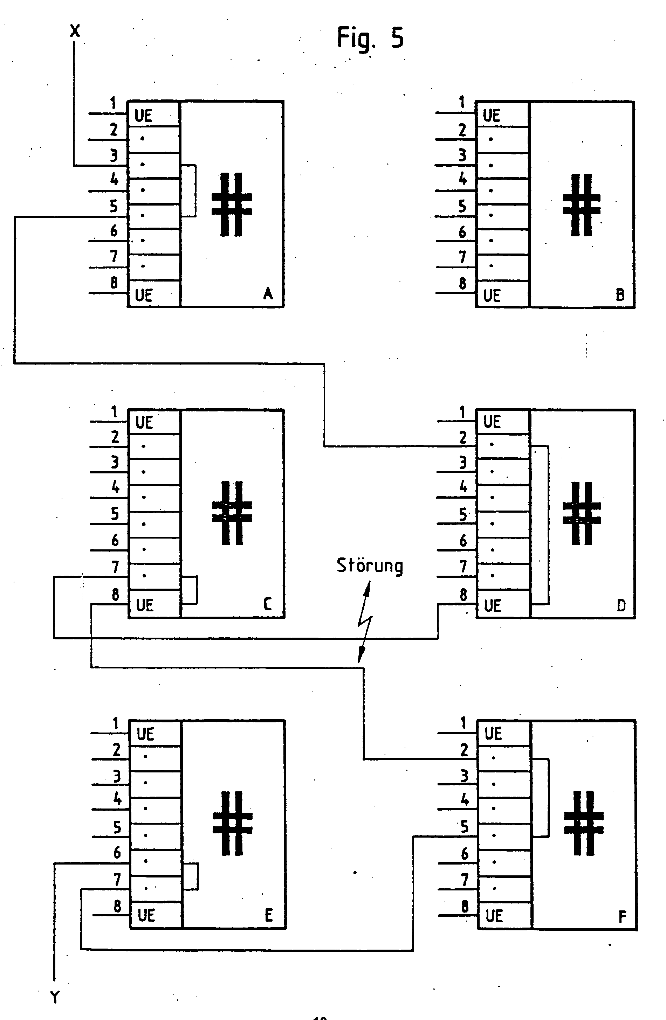

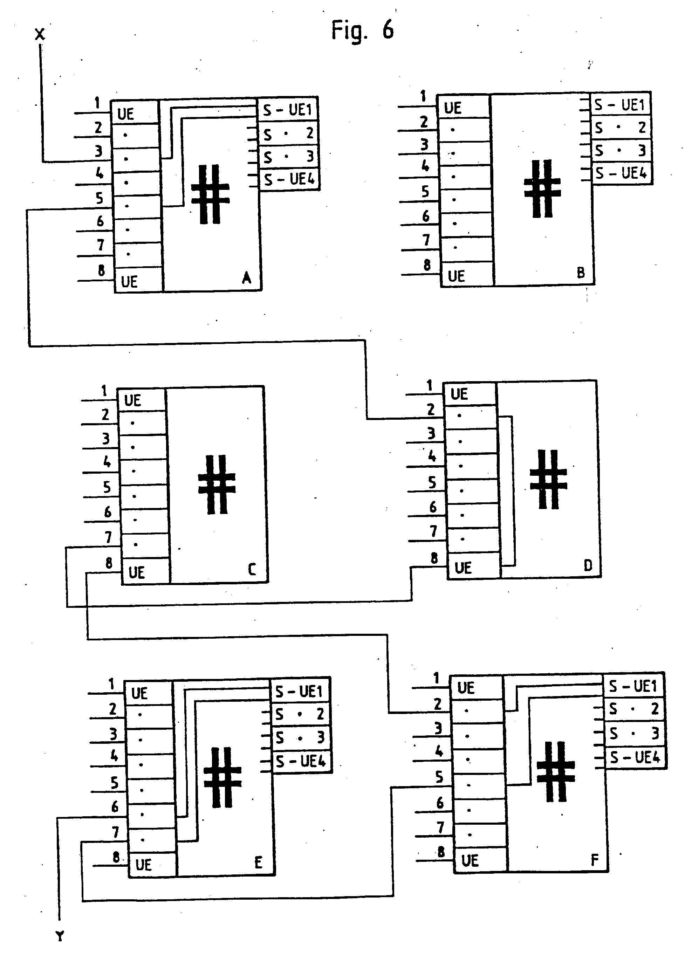

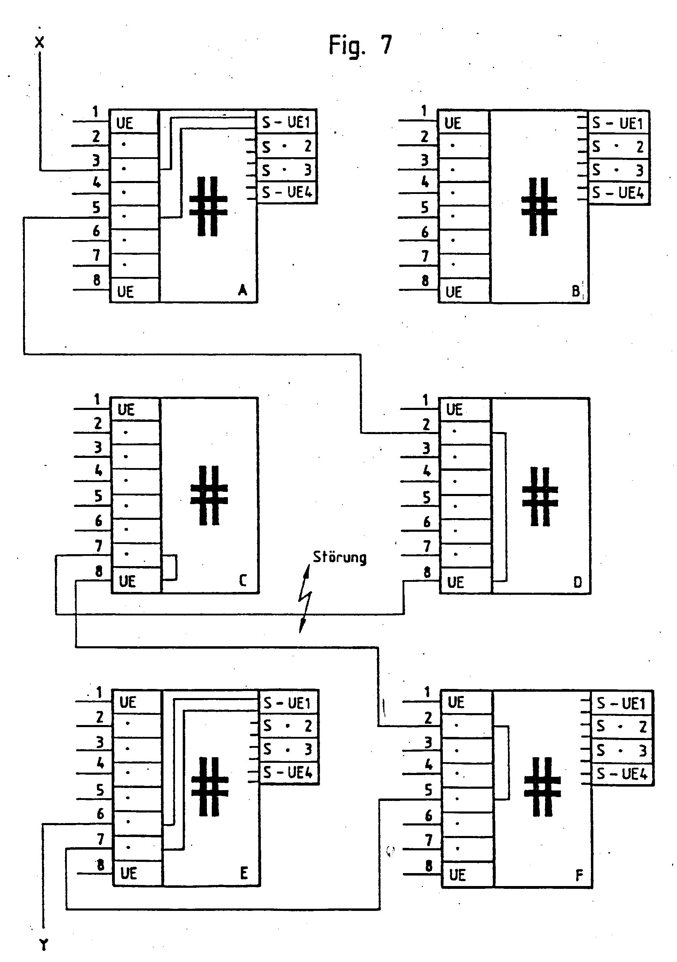

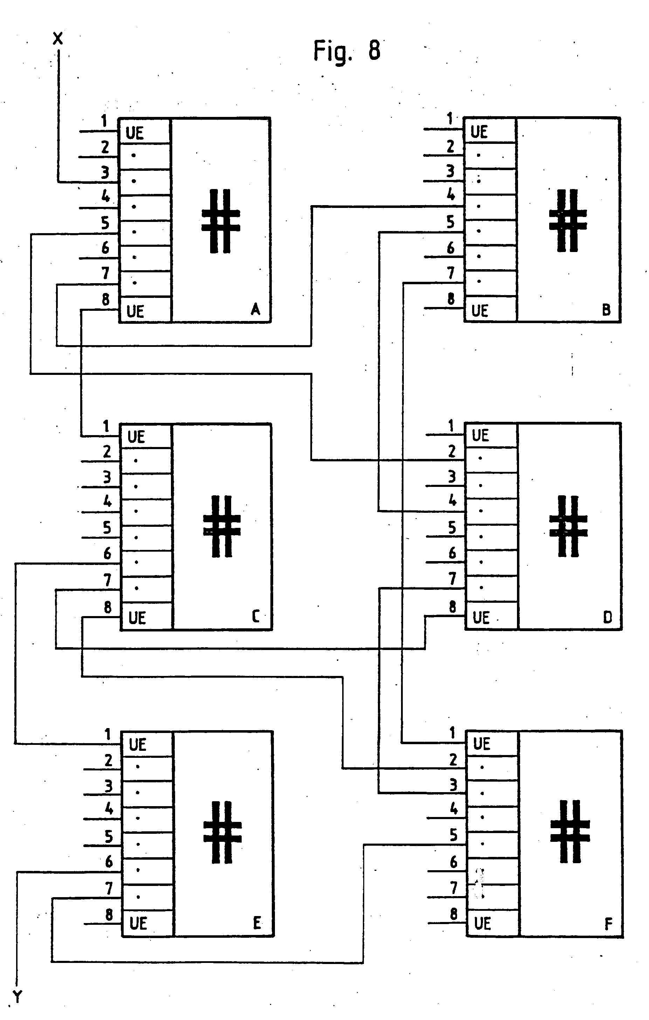

## Patentansprüche

1.    Verfahren zum Erlangen von Netzkenntnissen in einem digitalen Übertragungsnetz zur Übertragung von Digitalsignalen mit als End- oder Durchgangsknoten geschalteten Netzknoten (NK), die elektronische Verteiler mit über Netzkenntnisse verfügende Schaltungen enthalten, an die lokale Rechner angeschlossen sind, mit zwischen den Netzknoten (NK) liegenden Digitalsignalabschnitten (DSA), mit einem zentralen Rechner, der mit den lokalen Rechnern verbunden ist, und mit Digitalsignalverbindungen (DSV), die von einem Start-Endknoten (z.B. A) über Durchgangsknoten (z.B. D,C,F) zu einem Ziel-Endknoten (z.B. E) schalt- und überwachbar sind,

**dadurch gekennzeichnet,**

daß vom Start-Endknoten (z.B. A) in Richtung Ziel-Endknoten (z.B. E) und vom Ziel-Endknoten in Richtung Start-Endknoten (z.B. A) jeweils ein Telegramm mit einem Startzeichen, einer Kennung von Signalart und Betriebsweise, Startdaten zur Identifikation der Endknoten (z.B. A und E) und mit einem Endezeichen ausgesendet werden,

daß die Telegramme in den Durchgangsknoten (z.B. D,C,F) gespeichert, ausgewertet und mit eigenen Durchgangsdaten ergänzt werden,

daß die Endknoten (z.B. A und E) anhand der eintreffenden Telegramme einen korrekten Aufbau der Digitalsignalverbindung (DSV) dem zentralen Rechner melden und dieser die Durchschaltung des Digitalsignals veranlaßt oder

daß bei Ausfall des zentralen Rechners das Digitalsignal in den Netzknoten (NK) anhand der gespeicherten Informationen der empfangenen Telegramme durchgeschaltet wird.

2. Verfahren nach Anspruch 1,
**dadurch gekennzeichnet,**
daß als Digitalsignal ein Standard-Nutzsignal (NDS), ein Nutzsignal mit Sonderstruktur (SNDS), ein Prüfsignal (PDS) oder ein Ersatzsignal (EDS) verwendet wird.

3. Verfahren nach Anspruch 2,
**dadurch gekennzeichnet,**
daß bei einem bekannten Nutzsignal mit Sonderstruktur (SNDS) innerhalb bestimmter Netzknoten (NK) eine entsprechende Sonderüberwachungseinheit (S-UE) in den Signalweg eingeschleift wird.

4. Verfahren nach Anspruch 2,
**dadurch gekennzeichnet,**
daß bei einem unbekannten Nutzsignal mit Sonderstruktur (SNDS) innerhalb bestimmter Netzknoten (NK) ein Suchlauf gestartet wird, der das Signal allen Sonderüberwachungseinheiten (S-UE) innerhalb des Netzknotens (NK) nacheinander anbietet, bis die der Sonderstruktur entsprechende Sonderüberwachungseinheit (S-UE) ermittelt wird.

5. Verfahren nach Anspruch 3 oder 4,
**dadurch gekennzeichnet,**
daß bei Nutzsignalen mit Sonderstruktur (SNDS) die bestimmten Netzknoten (NK) ohne entsprechende Sonderüberwachungseinheit (S-UE) das Digitalsignal unverändert durchschalten.

6. Verfahren nach Anspruch 3 oder 4,
**dadurch gekennzeichnet,**
daß bei einer Störung des Nutzsignals innerhalb des durch die Störung betroffenen bestimmten Netzknotens (NK) eine Überwachung auf ein Standard-Nutzsignal (SDS) durchgeführt wird.

7. Verfahren nach einem der vorhergehenden Ansprüche,
**dadurch gekennzeichnet,**
daß der Netzknoten (NK), der eine bestimmte Zeitdauer kein Telegramm empfängt, ein Telegramm selbständig als Starttelegramm in regelmäßigen Zeitabständen aussendet.

8. Verfahren nach einem der vorhergehenden Ansprüche,
**dadurch gekennzeichnet,**
daß dem Telegramm ein Startsignal vorausgeht und ein Stopsignal nachfolgt.

9. Verfahren nach einem der vorhergehenden Ansprüche,
**dadurch gekennzeichnet,**
daß das Telegramm Informationen über den Start-Endknoten (z.B. A) und den Ziel-Endknoten (z.B. E) der Digitalsignalverbindung (DSV) und über die bereits durchlaufenen Netzknoten (NK) enthält.

10. Verfahren nach einem der vorhergehenden Ansprüche,
**dadurch gekennzeichnet,**
daß das Telegramm durch Prüfbits gesichert wird.

11. Verfahren nach einem der vorhergehenden Ansprüche,
**dadurch gekennzeichnet,**
daß bei Ausfall des zentralen Rechners das Digitalsignal in den einzelnen Netzknoten (NK) anhand von Listen in den angeschlossenen lokalen Rechnern durchgeschaltet wird, die für die Netzknoten (z.B. A...E) der Digitalsignalverbindung (DSV) angeben, zu welchem benachbarten Netzknoten (NK) jeweils ein Verbindungsweg zu schalten ist.

12. Verfahren nach Anspruch 11,

**dadurch gekennzeichnet,**
daß nach automatischen Wegesuchen über unterschiedliche Wege der Verbindungsweg fest geschaltet wird, der über die wenigstens Netzknoten (NK) führt.

13. Verfahren nach Anspruch 12,
**dadurch gekennzeichnet,**
daß bei der Wegesuche ein Standard-Nutzsignal (NDS) verwendet wird.

14. Verfahren nach einem der Ansprüche 11 bis 13,
**dadurch gekennzeichnet,**
daß bei Übertragung eines Nutzsignals mit Sonderstruktur (SNDS) erst nach der Durchschaltung des Signals die vorhandene Sonderüberwachungseinheit (S-UE) innerhalb der jeweils beteiligten Netzknoten (NK) verwendet wird.

15. Digitales Übertragungsnetz zur Übertragung von Digitalsignalen mit als End- oder Durchgangsknoten geschalteten Netzknoten (NK), die elektronische Verteiler mit über Netzkenntnisse verfügende Schaltungen enthalten, an die lokale Rechner angeschlossen sind, mit zwischen den Netzknoten (NK) liegenden Digitalsignalabschnitten (DSA), mit einem zentralen Rechner, der mit den lokalen Rechnern verbunden ist, und mit Digitalsignalverbindungen (DSV), die von einem Start-Endknoten (z.B. A) über Durchgangsknoten (z.B. D,C,F) zu einem Ziel-Endknoten (z.B. E) schalt- und überwachbar sind,
**dadurch gekennzeichnet,**
daß im Start-Endknoten (z.B. A) und im Ziel-Endknoten (z.B. E) Mittel zum Aussenden jeweils eines Telegramms, enthaltend ein Startzeichen, eine Kennung von Signalart und Betriebsweise, Startdaten zur Identifikation der Endknoten (z.B. A und E) und ein Endezeichen, vom Start-Endknoten (z.B. A) in Richtung Ziel-Endknoten (z.B. E) und vom Ziel-Endknoten (z.B. E) in Richtung Start-Endknoten (z.B. A) vorgesehen sind,
daß in den Durchgangsknoten (z.B. D,C,F) Mittel zur Speicherung und Auswertung der Telegramme vorgesehen sind,
daß die Endknoten (z.B. A und E) Mittel zur Meldung eines korrekten Aufbaus der Digitalsignalverbindung (DSV) an den zentralen Rechner anhand der eintreffenden Telegramme aufweisen,
daß der zentrale Rechner Mittel zum Durchschalten des Digitalsignals im Anschluß an die Meldung des Verbindungsaufbaus aufweist und
daß in den Netzknoten (NK) Mittel zum Durchschalten des Digitalsignals anhand der gespeicherten Informationen der empfangenen Telegramme bei Ausfall des zentralen Rechners vorgesehen sind.

16. Digitales Übertragungsnetz nach Anspruch 15,
**dadurch gekennzeichnet,**
daß in den Netzknoten (NK) zur Überwachung der Digitalsignale Standardüberwachungseinheiten (UE) und Sonderüberwachungseinheiten (S-UE) vorgesehen sind und daß die Sonderüberwachungseinheiten (S-UE) zur Überwachung von Digitalsignalen mit Sonderstruktur in den Weg der Digitalsignalverbindung (DSV) eingeschleift sind.

## Claims

1. Method for acquiring network knowledge in a digital transmission network for transmitting digital signals, having network nodes (NK) connected as terminal nodes or transit nodes which contain electronic distributors with circuits having network knowledge, to which local computers are connected, having digital signal sections (DSA) lying between the network nodes (NK), having a central computer connected to the local computers, and having digital signal connections (DSV) which can be connected and monitored from a starting terminal node (for example A) via transit nodes (for example D, C, F) to a destination terminal node (for example E), characterized in that a telegram having a start character, an identifier of the signal type and operating mode, start data for identifying the terminal nodes (for example A and E) and having an end character is transmitted in each case from the starting terminal node (for example A) in the direction of the destination terminal node (for example E) and from the destination terminal node in the direction of the starting terminal node (for example A), in that the telegrams are stored, evaluated and supplemented by intrinsic transit data in the transit nodes (for example D, C, F), in that, on the basis of the incoming telegrams, the terminal nodes (for example A and E) report a correct establishment of the digital signal connection (DSV) to the central computer and the latter initiates the through-connection of the digital signal, or in that, in the event of the failure of the central computer, the digital signal is connected through in the network nodes (NK) on the basis of the stored information from the telegrams received.

2. Method according to Claim 1, characterized in that a standard useful signal (NDS), a useful signal with special structure (SNDS), a test signal (PDS) or an alternate signal (EDS) is used as digital signal.

3. Method according to Claim 2, characterized in that in the case of a known useful signal with special structure (SNDS), a corresponding special monitoring unit (S-UE) is connected into the signal path within specific network nodes (NK).

4. Method according to Claim 2, characterized in that in the case of an unknown useful signal with special structure (SNDS), a search run is started within specific network nodes (NK), which search run successively offers the signal to all special monitoring unite (S-UE) within the network node (NK) until the special monitoring unit (S-UE) corresponding to the special structure is determined.

5. Method according to Claim 3 or 4, characterized in that in the case of useful signals with special structure (SNDS), the specific network nodes (NK) without corresponding special monitoring unit (S-UE) connect through the digital signal without modification.

6. Method according to Claim 3 or 4, characterized in that in the event of a disturbance of the useful signal within the specific network node (NK) affected by the disturbance, monitoring for a standard useful signal (SDS) is carried out.

7. Method according to one of the preceding claims, characterized in that the network node (NK) that does not receive any telegrams for a specific time period automatically transmits a telegram as start telegram at regular time intervals.

8. Method according to one of the preceding claims, characterized in that the telegram is preceded by a start signal and followed by a stop signal.

9. Method according to one of the preceding claims, characterized in that the telegram contains information about the starting terminal node (for example A) and the destination terminal node (for example E) of the digital signal connection (DSV) and about the network nodes (NK) that have already been passed.

10. Method according to one of the preceding claims, characterized in that the telegram is protected by check bits.

11. Method according to one of the preceding claims, characterized in that if the central computer fails, the digital signal is connected through in the individual network nodes (NK) on the basis of lists in the connected local computers, which state, for the network nodes (for example A...E) of the digital signal connection (DSV), to which adjacent network node (NK) a connection path is to be connected in each case.

12. Method according to Claim 11, characterized in that, after automatic path searching over different paths, the connection path that leads over the fewest network nodes (NK) is permanently connected.

13. Method according to Claim 12, characterized in that a standard useful signal (NDS) is used for the path searching.

14. Method according to one of Claims 11 to 13, characterized in that in the case of transmission of a useful signal with special structure (SNDS), the existing special monitoring unit (S-UE) within the respective participating network nodes (NK) is used only after the signal has been connected through.

15. Digital transmission network for transmitting digital signals, having network nodes (NK) connected as terminal nodes or transit nodes which contain electronic distributors with circuits having network knowledge, to which local computers are connected, having digital signal sections (DSA) lying between the network nodes (NK), having a central computer connected to the local computers, and having digital signal connections (DSV) which can be connected and monitored from a starting terminal node (for example A) via transit nodes (for example D, C, F) to a destination terminal node (for example E), characterized in that means for transmitting a telegram, containing a start character, an identifier of the signal type and operating mode, start data for identifying the terminal nodes (for example A and E) and an end character, from the starting terminal node (for example A) in the direction of the destination terminal node (for example E) and from the destination terminal node (for example E) in the direction of the starting terminal node (for example A) are provided in the starting terminal node (for example A) and in the destination terminal node (for example E) in each case, in that means for storing and evaluating the telegrams are provided in the transit nodes (for example D, C, F), in that the terminal nodes (for example A and E) have means for reporting a correct establishment of the digital signal connection (DSV) to the central computer on the basis of the incoming telegrams, in that the central computer has means for connecting through the digital signal following the report of the connection establishment, and in that means for connecting through the digital signal on the basis of the stored information from the telegrams received in the event of the failure of the central computer are provided in the network nodes (NK).

16. Digital transmission network according to Claim 15, characterized in that standard monitoring units (UE) and special monitoring units (S-UE) are provided in the network nodes (NK) for monitoring the digital signals, and in that the special monitoring units (S-UE) for monitoring digital signals with special structure are connected into the path of the digital signal connection (DSV).

**Revendications**

1. Procédé d'acquisition d'informations concernant le réseau dans un réseau numérique de transmission de signaux numériques comportant des noeuds (NK) de réseau branchés en tant que noeuds terminaux ou de transfert, qui comprennent des répartiteurs électroniques à circuits disposant d'informations concernant le réseau auxquels sont connectés des ordinateurs locaux, le réseau de transmission comportant des sections (DSA) numériques situées entre les noeuds (NK) de réseau, à un ordinateur central, qui est relié aux ordinateurs locaux, et des connexions (DSV) numériques, que l'on peut établir et contrôler d'un noeud terminal de départ (par exemple A) vers un noeud terminal de destination (par exemple E) par l'intermédiaire de noeuds de transfert (par exemple D, C, F),
caractérisé en ce que
on émet du noeud terminal de départ (par exemple A) vers le noeud terminal de destination (par exemple E) et du noeud terminal de destination vers le noeud terminal de départ (par exemple A) respectivement un télégramme comportant un signal de départ, un indicateur de type de signal et de mode de fonctionnement, des données de départ pour identifier les noeuds (par exemple A et E) et un signal de fin,
on mémorise les télégrammes dans les noeuds de transfert (par exemple D, C, F), on les exploite et on les complète par des données de transfert propres à ces noeuds,
les noeuds terminaux (par exemple A et E) signalent à l'ordinateur central un établissement correct de la connexion (DSV) numérique au moyen des télégrammes arrivants et l'ordinateur central provoque la communication du signal numérique, ou
en cas de panne de l'ordinateur central, on communique dans les noeuds (NK) de réseau le signal numérique au moyen des informations mémorisées des télégrammes reçus.

2. Procédé suivant la revendication 1,
caractérisé en ce que
on utilise comme signal numérique un signal (NDS) utile normalisé, un signal utile (SNDS) de structure spéciale, un signal (PDS) de vérification ou un signal (EDS) de remplacement.

3. Procédé suivant la revendication 2,
caractérisé en ce que
on introduit pour un signal utile connu de structure (SNDS) spéciale à l'intérieur de certains noeuds (NK) de réseau, une unité (S-UE) de contrôle spéciale correspondante, dans la voie de transmission de signal.

4. Procédé suivant la revendication 2,
caractérisé en ce que
pour un signal utile inconnu de structure (SNDS) spéciale à l'intérieur de certains noeuds (NK) de réseau, on commence un processus de recherche, qui propose le signal à toutes les unités (S-UE) de contrôle spéciales à l'intérieur du noeud (NK) de réseau successivement, jusqu'à ce qu'on ait déterminé l'unité (S-UE) de contrôle spéciale correspondant à la structure spéciale.

5. Procédé suivant la revendication 3 ou 4,
caractérisé en ce que
pour des signaux utiles de structure (SNDS) spéciale, les noeuds (NK) de réseau déterminés communiquent sans modification le signal numérique sans unité (S-UE) de contrôle spéciale correspondante.

6. Procédé suivant les revendications 3 ou 4,
caractérisé en ce que
en cas de perturbation du signal utile à l'intérieur du noeud (NK) de réseau déterminé concerné par la perturbation, on effectue un contrôle du signal (SDS) utile normalisé.

7. Procédé suivant l'une des revendications précédentes,
caractérisé en ce que
le noeud (NK) de réseau qui, pendant une durée déterminée, ne reçoit pas de télégramme, envoie de lui-même un télégramme en tant que télégramme de départ pendant des intervalles de temps réguliers.

8. Procédé suivant l'une des revendications précédentes,
caractérisé en ce que
un signal de départ précède le télégramme et un signal d'arrêt le suit.

9. Procédé suivant l'une des revendications précédentes,
caractérisé en ce que
le télégramme comprend des informations relatives au noeud terminal de départ (par exemple A) et au noeud terminal de destination (par exemple E) de la connexion (DSV) numérique et aux noeuds (NK) déjà parcourus.

10. Procédé suivant l'une des revendications précédentes,
caractérisé en ce que
le télégramme est protégé par des bits de contrôle.

11. Procédé suivant l'une des revendications précédentes,
caractérisé en ce que
en cas de défaillance de l'ordinateur central, on transmet dans les différents noeuds (NK) de réseau le signal numérique au moyen de listes, qui se trouvent dans les ordinateurs locaux connectés et indiquent pour les noeuds de réseau (par exemple A...E) de la connexion (DSV) numérique, vers quel noeud (NK) voisin de réseau il faut établir une voie de liaison.

12. Procédé suivant la revendication 11,
caractérisé en ce que
après avoir recherché automatiquement différentes voies, on établit de façon fixe la voie de liaison, qui passe au moins par les noeuds (NK) de réseau.

13. Procédé suivant la revendication 12,
caractérisé en ce que
on utilise, lors de la recherche de voie, un signal (NDS) utile normalisé.

14. Procédé suivant l'une des revendications 11 à 13,
caractérisé en ce que
lors de la transmission d'un signal utile de structure spéciale (SNDS), ce n'est qu'après avoir transmis le signal que l'on utilise l'unité (S-UE) présente de contrôle spéciale à l'intérieur des noeuds (NK) de réseau intervenants.

15. Réseau numérique de transmission de signaux numériques comportant des noeuds (NK) de réseau branchés en tant que noeuds terminaux ou de transfert, qui comprennent des répartiteurs électroniques, qui ont des circuits disposant d'informations concernant le réseau auxquels sont connectés des ordinateurs locaux, le réseau numérique de transmission comportant des sections (DSA) numériques situées entre les noeuds (NK) de réseau, un ordinateur central, qui est relié aux ordinateurs locaux, et des liaisons (DSV) numériques, que l'on peut établir et contrôler d'un noeud terminal de départ (par exemple A) vers un noeud terminal de destination (par exemple E) par l'intermédiaire de noeuds de transfert (par exemple D, C, F),

caractérisé en ce que

il est prévu dans le noeud terminal de départ (par exemple A) et dans le noeud terminal de destination (par exemple E) des moyens pour émettre un télégramme, qui comprend un signal de départ, un indicateur du type de signal et du mode de fonctionnement, des données de départ pour identifier les noeuds terminaux (par exemple A et E) et un signal de fin, du noeud terminal de départ (par exemple A) vers le noeud terminal de destination (par exemple E) et du noeud terminal de destination (par exemple E) vers le noeud terminal de départ (par exemple A),

il est prévu dans les noeuds de transfert (par exemple D, C, F) des moyens pour mémoriser et exploiter les télégrammes,

les noeuds terminaux (par exemple A et E) comportent des moyens pour signaler un établissement correct de la connexion (DSV) numérique à l'ordinateur central au moyen des télégrammes arrivants,

l'ordinateur central comporte des moyens pour transmettre le signal numérique à la suite du signalement d'établissement de liaisons et

en cas de défaillance de l'ordinateur central, il est prévu dans les noeuds (NK) de réseau des moyens pour transmettre le signal numérique à l'aide des informations mémorisées des télégrammes reçus.

16. Réseau numérique de transmission suivant la revendication 15,
caractérisé en ce que
il est prévu dans les noeuds (NK) de réseau des unités (UE) de contrôle normalisées et des unités (S-UE) de contrôle spéciales pour contrôler les signaux numériques et on introduit les unités (S-UE) de contrôle spéciales destinées à contrôler des signaux numériques de structure spéciale, dans la voie de la liaison (DSV) numérique.

Fig. 1

# Fig. 2

# Fig. 3

# Fig. 4

# Fig. 5

Fig. 6

# Fig. 7

# Fig. 8